# EUROPEAN PATENT SPECIFICATION

(11) **EP 0 763 776 B1**
(45) Date of publication and mention of the grant of the patent: **05.12.2001**
(21) Application number: 96114984.6
(22) Date of filing: 18.09.1996
(51) Int. Cl.: G03D 13/00, G03D 3/13

(54) **Method of and device for coupling a film strip to a processing sheet**
Verfahren und Vorrichtung zur Verbindung eines Filmstreifens mit einer Entwicklungsführungskarte
Méthode et dispositif pour fixer une bande photographique à une carte de guidage de développement

(30) Priority: 18.09.1995 JP 23823395
(43) Date of publication of application: 19.03.1997
(73) Proprietor: NORITSU KOKI CO., LTD., Wakayama-shi, Wakayama (JP)
(72) Inventor: Masuda, Shigeru, Wakayama-shi, Wakayama (JP); Arimoto, Keigo, Wakayama-shi, Wakayama (JP)
(74) Representative: Müller-Boré & Partner Patentanwälte

(56) References cited:
- EP-A- 0 624 822
- EP-A- 0 738 923

## Description

The invention relates to a method of coupling a film strip to a processing leader sheet by means of which the film strip is transported in an automatic film processing apparatus and a device for coupling a film strip to a processing leader sheet.

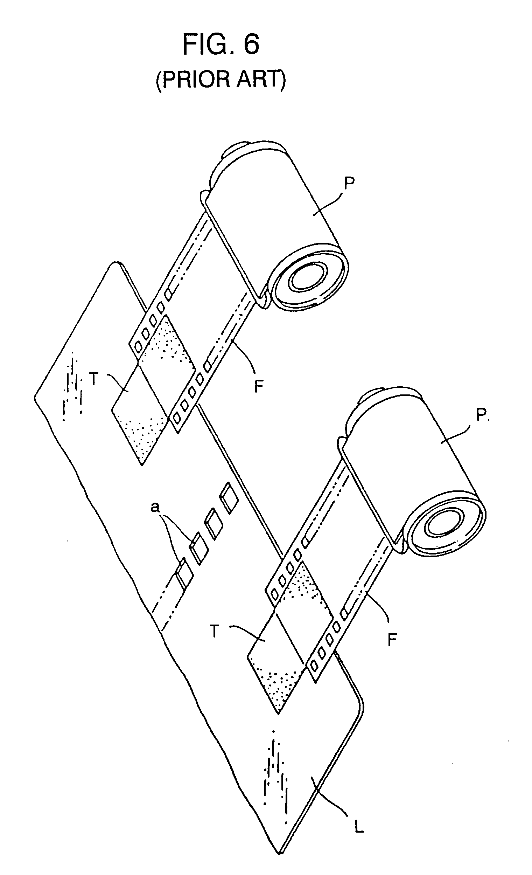

In cases where film strips are processed by automatic film processing apparatuses of the type using what is called a film trailing leader sheet or a leader sheet simply, a leader sheet to which film strips are spliced is moved along a film processing path of the automatic film processing apparatus to haul the film strips through the processing path. Typically, as shown in Figure 6, film strips F drawn out of film cartridges or film patrones P are spliced to a leader sheet L together by means of pieces of splicing tape T such as an adhesive tapes. Leader sheets L of this kind, which are typically made of flexible plastic sheets, have a lengthwise row of perforations a formed therein at regular intervals. Such a leader sheet L attached with film strips F is moved by means of a motor-driven sprocket wheel along the film processing path through engagement between the perforations and teeth of the sprocket wheel.

In events where a film strip F is accidentally detached from the leader sheet L during film processing, the film strip F comes to a standstill in a processing tank and ends in failure in processing. Further, it is hard to bring the film strip F out of the processing tank and there is a great apprehension of exposing the film strip to light during removing the film strip F. In order to prevent film strips F from being detached from the leader sheet L, the film strips must be strongly spliced to the leader sheet L.

Because film strips F and a leader sheet L must be spliced in precise relative positions, the utilization of a splicing tape T makes it necessary to employ a special work table and, in addition, encounters somewhat troublesome operation of attaching the splicing tape T to and removing it from the leader sheet. Further, the splicing tape T is hardly reusable and somewhat wasteful.

A coupler type of leader sheet has been proposed in, for instance, Japan-ese Unexamined Patent Application No. 9-073161 filed by the applicant of this application. This type of leader sheet is available for film strips of the type having a pair of coupling holes transversely located in its leader section. Briefly stating, the leader sheet has a pair of transversal slots, namely a front slot and rear slot, formed in close proximity to the trailing end and a pair of coupler tongues separated transversely at a distance and extending across over the front slot. For coupling the film strip to the leader sheet, the leader section of the film strip is passed first through the rear slot from the front side to the back side of the leader sheet and then through the front slot from the back side to the front side of the leader sheet pushing and bending the coupler tongues upward. As soon as the coupler tongues encounter the coupling holes of the leader section on the way of upward movement of the leader section of the film strip, the coupler tongues snap back and enter the coupling holes of the leader section to couple the film strip to the leader sheet. This type of leader sheets provide easy coupling operation and precise coupling of film strips. The coupler tongues extending rearward, namely in a direction opposite to the direction of movement of the leader sheet, are not caught in the film processing path of the automatic processing apparatus during movement of the film leader nor accidentally release the film strip from the leader sheet. Furthermore, the pair of transversal slots prevent the film strip coupled to the leader sheet from swaying laterally and, as a result, from snaking its way through the processing path.

Other examples of leader sheets are disclosed in the post-published document EP-A-0 738 923.

While the coupling type film leader provides precise coupling of film strips thereto and eliminate the employment of splicing tapes which are always wasteful, operators are still requested to be proficient in coupling operation in the field of processing line.

It is an object of the invention to provide an easy method of coupling film strips to a coupling type leader sheet as defined in claim 1.

It is another object of the invention to provide a device for realizing the easy coupling method as defined in claim 2.

According to the invention, a film strip having a coupler hole formed in a leading section of the film strip is coupled to a film trailing leader sheet, for hauling the film strip through a processing path of an automatic processing apparatus, which has transversal front and rear slots located at a distance in a longitudinal direction of the leader sheet and a pair of coupler tongues which extend across over the front slot and are engaged by the coupler hole of the film strip, so as thereby to couple the film strip to the film trailing leader sheet. For practically coupling the film strip to the film trailing leader sheet, a film trailing leader sheet is placed in a specified position on a coupling table having a film guide concavity defined by a curved surface. In the specified position, a rear edge of the front slot of the film trailing leader sheet lays inside an aperture of the film guide concavity and, however, is located in close proximity to the front edge of the aperture of the film guide concavity and a rear edge of the rear slot of the film trailing leader sheet lays along the rear edge of the aperture of the film guide concavity. Subsequently, the leader section of the film strip is inserted into the film guide concavity of the coupling table through the rear slot from the front side to the back side of the film trailing leader sheet and continuously forced to move the leader section of the film strip along the curved surface until the front end of the leader section of the film strip passes through the front slot from the back side to the front side of the film trailing leader sheet. While the leader section moves through the front slot of the leader sheet, it pushes and bends the coupler tongues upward and lets the coupler tongues of the leader sheet snap back and enter the coupler holes of the film strip to bring the coupler tongues of the leader sheet into engagement with the coupler holes of the film strip. Finally, by pulling back and stretching the film strip tight, the film strip is coupled to the film trailing leader sheet.

The above and other objects and features of the present invention will be clearly understood from the following description with respect to a preferred embodiment thereof when considered in conjunction with the accompanying drawings, in which:
Figure 1 is a schematic illustration showing a film trailing leader sheet and film strips to be coupled to the film trailing leader sheet;
Figure 2 is a perspective view of a coupling table according to an embodiment of the invention on which the film trailing leader sheet is placed in position;
Figure 3 is a cross-sectional view of the coupling table with the film trailing leader sheet placed thereon and a film strip being coupled to the film trailing leader sheet;
Figure 4 is a cross-sectional view of Figure 1 taken along line IV - IV;
Figure 5 is a perspective view showing a leading section of another type of film trailing leader sheet; and
Figure 6 is an illustration showing a prior art film trailing leader sheet to which film strips are spliced with splicing tape.

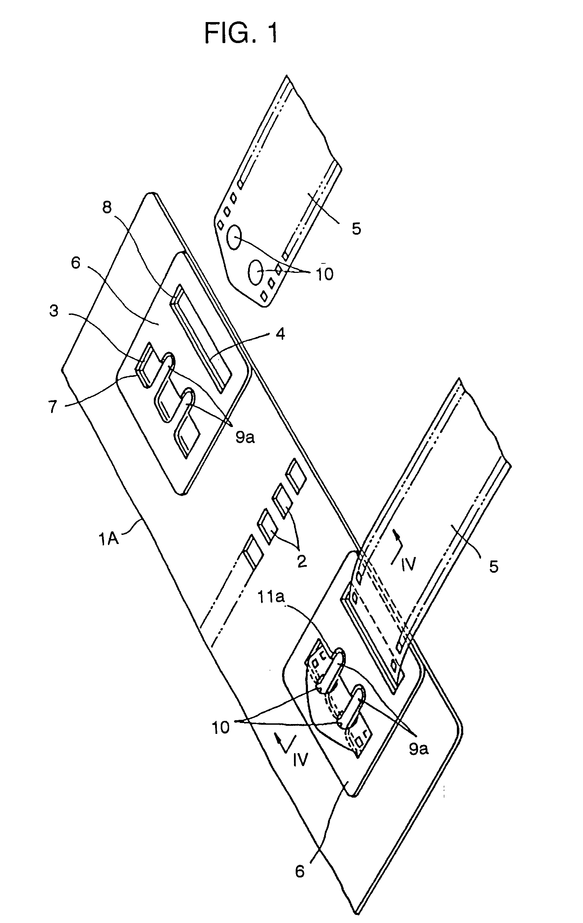

Referring to the drawings in detail, in particular to Figure 1, there are shown a trailing section of a generally rectangularly-shaped leader sheet 1A and leader sections of film strips 5, one of these film strips 5 having been coupled to the leader sheet 1A and another being before coupling. The leader sheet 1A is made of a plastic sheet and formed with a straight row of perforations 2 along the longitudinal center line. These perforations 2 are engaged by teeth of driving sprockets of an automatic processing apparatus (not shown) to move the leader sheet 1A along a processing path of the automatic processing apparatus in a well known manner. On each side of the row of perforations 2, the leader sheet 1A is formed with a pair of slots, namely a front slot 3 and a rear slot 4, extending transversely and arranged in parallel to each other. Each slot 3, 4 has a length in a transverse direction of the leader sheet 1A approximately equal to the width of the leader section of the film strip 5 and, however, allows the leader section of the film strip 5 to pass easily therethrough, and a width in a lengthwise direction of the leader sheet 1A sufficiently wide for the leader section of the film strip 5 to pass therethrough. A coupler pad 6 is bonded, or otherwise secured, to the trailing section of the leader sheet 1A with its rear edge lying along the rear edge of the leader sheet 1 A. In more detail, the coupler pad 6 is made of a plastic sheet and formed with front and rear slots 7 and 8 in conformity in size with the front and rear slots 3 and 4 of the leader sheet 1A, respectively. Further, the coupler pad 6 is formed integrally with coupler tongues 9a arranged in parallel to each other at a specified distance. Each coupler tongue 9a extends across over the front slot 7, and the rounded free end of the coupler tongue 9a is received within a semi-circular notch 11a and placed on the marginal section surrounding the front slot 3 of the leader sheet 1A.

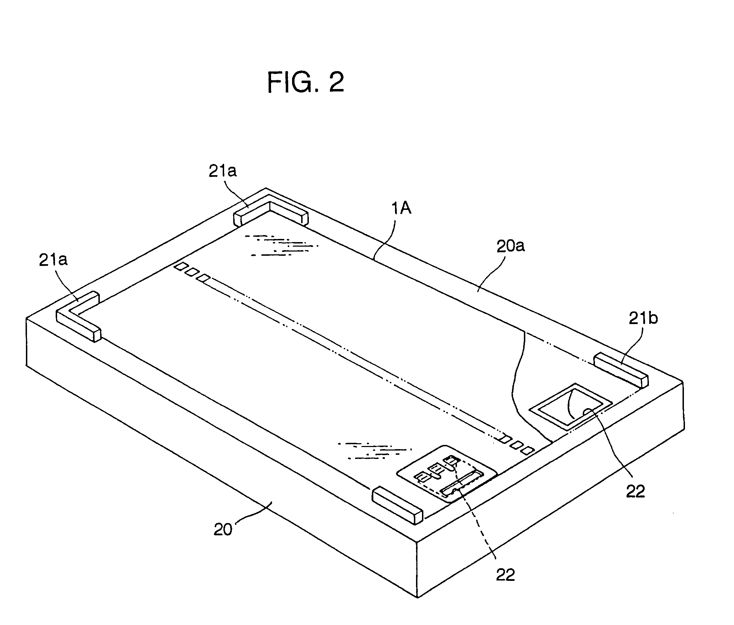

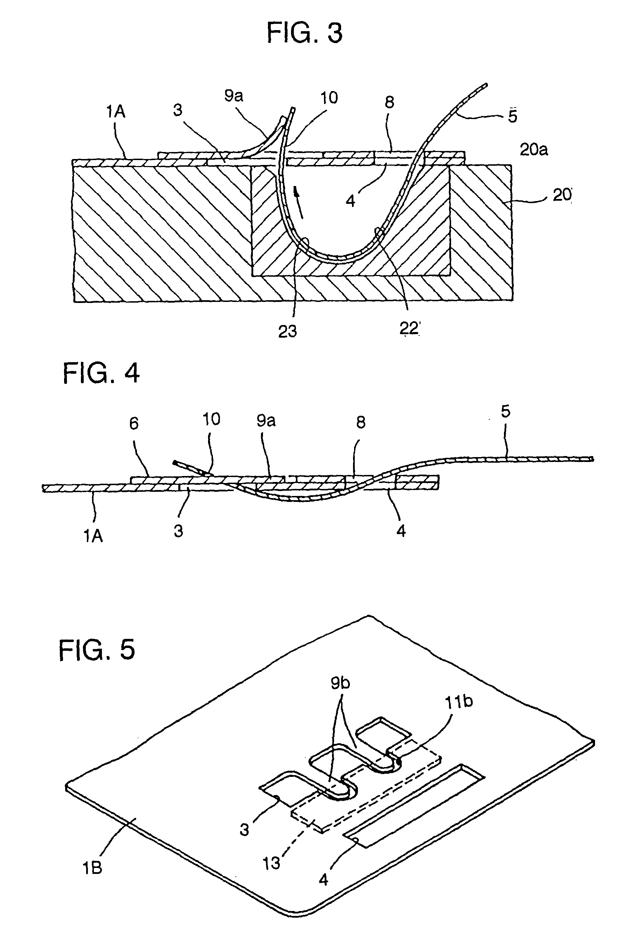

The film strip 5 has a pair of coupling holes 10 separated transversely at a specified distance. It is a matter of course that each coupler tongue 9a has a width approximately equal to or slightly larger than the diameter of the coupling hole 10 and the coupler tongues 9a are at the same distance as the specified distance at which the coupling holes 10 are arranged. The film strip 5 is coupled to the leader sheet 1A by the utilization of a coupling device 20 having a flat top surface 20a such as shown in Figures 2 and 3.

Referring to Figures 2 and 3, the coupling device 20 has a pair of film guide concavities 22 separated transversely at a distance and located in proximity to the rear end thereof. Each film guide concavity 22 is defined by a generally elliptical arcuate guide surface 23. The coupling device 20 is formed on the flat top surface 20a with an L-shaped positioning guide 21a located in close proximity to each rear corner and a side guide 21 b located on outer side of each film guide concavity 22. These guides 21a and 21b place the leader sheet 1A in position on the coupling device 20 such that the rear edge of the front slot 3 of the leader sheet 1A lays inside the aperture of the film guide concavity 22 and, however, is located in close proximity to the front edge of the aperture of the film guide concavity 22, and the rear edge of the rear slot 4 of the leader sheet 1A lays along the rear edge of the aperture of the film guide concavity 22.

After having placing the leader sheet 1A on the coupling device 20, the leader section of the film strip 5 is inserted into the film guide concavity 22 through the rear slots 4 and 8 of the leader sheet 1A and forced toward the front slots 3 and 7 of the leader sheet 1A along the guide surface 23. When the leading end of the leader section of the film strip 5 reaches the front slot 3 of the leader sheet 1 A, it abuts against the coupler tongues 9a. As the film strip 5 is further forced, the leader section of the film strip 5 pushes and bends the coupler tongues 9a upward. When the film strip 5 is further forced to locate the coupling holes 10 at a position where the rounded free ends of the bent coupler tongues 9a encounter the coupling holes 10 of the leader section, the coupler tongues 9a snap back and enter the coupling holes 10 of the leader section the film strip 5. Thereafter, when the film strip 5 is gently pulled back and stretched tight, the coupler tongues 9a restor to bring the rounded free ends into the semi-circular notches 11a, coupling the film strip 5 to the leader sheet 1A as shown in Figure 4.

It is effective to push the rear section of the leader sheet 1A against the coupling device 20 with fingers or by means of a holding member in order to prevent the leader sheet 1 A from rising upward from the top surface 20a of the coupling device 20 while the leader section of the film strip 1A pushes the coupler tongues 9a upward.

Figure 5 shows a modification of the leader sheet 1A. A leader sheet 1B may be formed integrally with coupler tongues 9b extending across over the front slot 3 and semi-circular notches 11b for receiving rounded free end of the coupler tongues 9b therein. In this case, in order to prevent the coupler tongues 9b slipping off from the coupler holes 10 of the film strip 1, a backing sheet 13 is bonded, or otherwise secured, to the back of the leader sheet 1B so as to prevent the coupler tongues 9b from bending downward.

At least the coupler tongues 9a or 9b and coupler holes 10 are desirable to couple precisely a film strip 5 to the film trailing leader sheet 1 without inclination therebetween.

It is to be understood that although the present invention has been described with regard to preferred embodiments thereof, various other embodiments and variants may occur to those skilled in the art, which are within the scope of the invention, and such other embodiments and variants are intended to be covered by the following claims.

## Claims

1. A method of coupling a film strip (5) having at least one coupler hole (10) formed in a leading section of the film strip (5) to a film trailing leader sheet (1A; 1B) having a front side and a back side for hauling the film strip (5) through a processing path of an automatic processing apparatus, said leader sheet (1A; 1B) having at least a pair of front (3, 7) and rear (4, 8) slots the rear slot being located closer to a border of the leader sheet, parallel to said border, and at a predefined distance along the longitudinal direction of the leader sheet (1A; 1B) from said border of the leader sheet, and
at least one coupler tongue (9a; 9b) which extends across and over the front slot (3, 7) and is engaged by the coupler hole (10) of the film strip (5) so as thereby to couple the film strip (5) to the film trailing leader sheet (1A; 1B), the method comprising the steps of:
placing a film trailing leader sheet (1A; 1 B) in position at positioning guide means (21a, 21b) protruding from a flat top surface of a coupling table (20), said surface having at least one film guide concavity (22) defined by a curved surface (23) such that a rear edge of the front slot (3, 7) of the film trailing leader sheet (1A; 1B) lays inside the aperture of the film guide concavity (22) and is located in close proximity to one edge of the aperture of the film guide concavity (22) and a rear edge of the rear slot (4, 8) of the film trailing leader sheet (1A; 1B) lays along the other edge of the aperture of the film guide concavity (22);
inserting the leader section of the film strip (5) into the film guide concavity (22) of the coupling table (20) through the rear slot (4, 8) from the front side of the film trailing leader sheet (1A; 1B) to a back side of the film trailing leader sheet (1A; 1B);
forcing the film strip (5) to move the leader section of the film strip (5) along the curved surface until a front end of the leader section of the film strip (5) coming from the back side of the film trailing leader sheet (1A; 1B) passes through the front slot (3, 7) and to the front side of the film trailing leader sheet (1A; 1B) so as to bend the coupler tongue (9a; 9b);
letting the coupler tongue (9a; 9b) of the leader sheet (1A; 1B) snap back and enter the coupler hole (10) of the film strip (5) to bring the coupler tongue (9a; 9b) of the leader sheet (1A; 1B) into engagement with the coupler hole (10) of the film strip (5); and
pulling back and stretching the film strip (5) tight.

2. A film coupling device for coupling a film strip (5) having at least one coupler hole (10) formed in a leading section of the film strip (5) to a film trailing leader sheet (1A; 1 B) for hauling the film strip (5) through a processing path of automatic processing apparatus, said leader sheet (1A; 1B) having a pair of transversal front (3, 7) and rear (4, 8) slots the rear slot being located closer to a border of the leader sheet, parallel to said border, and at a predefined distance along the longitudinal direction of the leader sheet (1A; 1B) from said border of the leader sheet, and at least one coupler tongue (9a; 9b) which extends across and over the front slot (3, 7) and is engaged by the coupler hole (10) of the film strip (5) so as thereby to couple the film strip (5) to the film trailing leader sheet (1A; 1B), said film coupling device comprising:
a coupling table (20) having a flat top surface (20a) on which the film trailing leader sheet (1A; 1B) is placed;
film positioning guide means (21a, 21b) for placing the leader sheet (1A; 1B) in the specified position on the flat top surface (20a) of the table (20)
film guide means defined by a curved surface (23) formed in the table (20) to form an aperture in the flat top surface (20a) of the table (20) for guiding the film strip (5) inserted through the rear slot (4, 8) of the film trailing leader sheet (1A; 1B) film guide concavity in the flat top surface, the concavity comprising a toward the front slot (3, 7) of the film trailing leader sheet (1A; 1B), said aperture being shaped such that, when the leader sheet (1A; 1B) is located among said film guide means in a specified position on the flat top surface (20a) of the table (20), a rear edge of the front slot (3, 7) of the film trailing leader sheet (1A; 1B) lays inside the aperture and is located in close proximity to one edge of the aperture and a rear edge of the rear slot (4, 8) of the film trailing leader sheet (1A; 1B) lays along the other edge of the aperture.

3. A coupling device as defined in claim 2, wherein the aperture has a width approximately equal to a width of the leader section of the film strip (5).

4. A coupling device as defined in claim 2, wherein the film guide means (21 a, 21b) is provided on each side of a center line of the table (20).

## Patentansprüche

1. Verfahren zum Verbinden eines Filmstreifens (5), der wenigstens ein Kopplungs- bzw. Verbindungsloch (10), das in einem vorderen Abschnitt bzw. Führungsabschnitt des Filmstreifens (5) ausgebildet ist, an ein Filmnachziehführungsblatt (1A; 1B), das eine Vorder- und Rückseite aufweist, um den Filmstreifen (5) durch einen Verarbeitungsweg einer automatischen Verarbeitungsvorrichtung zu fördern, welches Führungsblatt (1A; 1B) wenigstens ein Paar von vorderen (3, 7) und rückwärtigen (4, 8) Schlitzen aufweist, wobei der rückwärtige Schlitz näher zu einem Rand des Führungsblatts parallel zu dem Rand in einem vorbestimmten Abstand entlang der Längsrichtung des Führungsblatts (1A; 1B) von dem Rand des Führungsblatts angeordnet ist, und wenigstens eine Kupplungszunge (9a, 9b) aufweist, welche sich über und oberhalb des vorderen Schlitzes (3, 7) erstreckt und durch das Kupplungsloch (10) des Filmstreifens (5) ergriffen ist, um so den Filmstreifen (5) an das Filmnachziehführungsblatt (1A; 1B) zu koppeln, wobei das Verfahren die Schritte umfaßt:
Anordnen eines Filmnachziehführungsblatts (1A; 1B) in einer Position an Positionierungsführungsmitteln (21a, 21b), die von einer ebenen, oberen Oberfläche eines Kupplungstisches (20) vorragen, welche Oberfläche wenigstens eine Filmführungskonkavität bzw. -vertiefung (22) aufweist, die durch eine gekrümmte Oberfläche (23) derart definiert ist, daß eine rückwärtige Kante des vorderen Schlitzes (3, 7) des Filmnachziehführungsblatts (1A; 1B) innerhalb der Öffnung der Filmführungskonkavität (22) liegt und in naher Nachbarschaft zu einer Kante der Öffnung der Filmführungskonkavität (22) angeordnet ist und eine rückwärtige Kante des rückwärtigen Schlitzes (4, 8) des Filmnachziehführungsblatts (1A; 1B) entlang der anderen Kante der Öffnung der Filmführungskonkavität (22) liegt;
Einführen des Führungsabschnitts des Filmstreifens (5) in die Filmführungskonkavität (22) des Kupplungstisches (20) durch den rückwärtigen Schlitz (4, 8) von der Vorderseite des Filmnachziehfuhrungsblatts (1A; 1B) zu einer Rückseite des Filmnachziehführungsblatts (1A; 1B);
Zwingen bzw. Beaufschlagen des Filmstreifens (5), sich zu dem Führungsabschnitt des Filmstreifens (5) entlang der gekrümmten Oberfläche zu bewegen, bis ein vorderes Ende des Führungsabschnitts des Filmstreifens (5) von der Rückseite des Filmnachziehführungsblatts (1A; 1B) kommend durch den vorderen Schlitz (3, 7) hindurchtritt und zu der Vorderseite des Filmnachziehführungsblatts (1A; 1B) gelangt, um die Kupplungszunge (9a, 9b) zu biegen;
Zulassen, daß die Kupplungszunge (9a, 9b) des Führungsblatts (1A; 1B) zurückschnappt und in das Kupplungsloch (10) des Filmstreifens (5) eintritt, um die Kupplungszunge (9a, 9b) des Führungsblatts (1A; 1B) in Eingriff mit dem Kupplungsloch (10) des Filmstreifens (5) zu bringen; und
Zurückziehen und Festspannen des Filmstreifens (5).

2. Filmverbindungsvorrichtung zum Verbinden eines Filmstreifens (5), der wenigstens ein Kupplungsloch (10), das in einem Führungsabschnitt des Filmstreifens (5) ausgebildet ist, an ein Filmnachziehführungsblatt (1A; 1B), um den Filmstreifen (5) durch einen Verarbeitungsweg einer automatischen Verarbeitungsvorrichtung zu fördern, welches Führungsblatt (1A; 1B) wenigstens ein Paar von querverlaufenden, vorderen (3, 7) und rückwärtigen (4, 8) Schlitzen aufweist, wobei der rückwärtige Schlitz näher zu einem Rand des Führungsblatts parallel zu dem Rand und in einem vorbestimmten Abstand entlang der Längsrichtung des Führungsblatts (1A; 1B) von dem Rand des Führungsblatts angeordnet ist, und wenigstens eine Kupplungszunge (9a, 9b) aufweist, welche sich quer und über den vorderen Schlitz (3, 7) erstreckt und durch das Kupplungsloch (10) des Filmstreifens (5) ergriffen ist, um so den Filmstreifen (5) an das Filmnachziehführungsblatt (1A; 1B) zu koppeln, welche Filmverbindungsvorrichtung umfaßt:
einen Kupplungstisch (20), der eine flache, obere Oberfläche (20a) aufweist, auf welcher das Filmnachziehführungsblatt (1A; 1B) angeordnet ist;
Filmpositionierungsführungsmittel (21a, 21b) zum Anordnen des Führungsblattes (1A; 1B) in der bestimmten Position auf der flachen, oberen Oberfläche (20a) des Tisches (20);
Filmführungsmittel, die durch eine gekrümmte Oberfläche (23) definiert sind, die in dem Tisch (20) ausgebildet ist, um eine Öffnung in der flachen, oberen Oberfläche (20a) des Tisches (20) zum Führen des Filmstreifens (5) auszubilden, der durch den rückwärtigen Schlitz (4, 8) des Filmnachziehführungsblatts (1A; 1B), angeordnet zwischen bzw. benachbart zu den Filmführungsmitteln, zu dem vorderen Schlitz (3, 7) des Filmnachziehführungsblatts (1A; 1B) eingeführt ist, welche Öffnung derart geformt ist, daß, wenn das Führungsblatt (1A; 1B) zwischen bzw. benachbart den Filmführungsmitteln in einer bestimmten Position auf der flachen Oberfläche (20a) des Tisches (20) angeordnet ist, eine rückwärtige Kante des vorderen Schlitzes (3, 7) des Filmnachziehführungsblatts (1A; 1B) innerhalb der Öffnung liegt und in enger Nachbarschaft zu einer Kante der Öffnung angeordnet ist und eine rückwärtige Kante des rückwärtigen Schlitzes (4, 8) des Filmnachziehführungsblatts (1A; 1B) entlang der anderen Kante der Öffnung liegt.

3. Verbindungsvorrichtung nach Anspruch 2, worin die Öffnung eine Breite aufweist, die etwa gleich einer Breite des Führungsabschnitts des Filmstreifens (5) ist.

4. Verbindungsvorrichtung nach Anspruch 2, worin die Filmführungsmittel (21a, 21b) auf jeder Seite einer Mittellinie des Tisches (20) vorgesehen sind.

## Revendications

1. Procédé pour raccorder une bande de film (5) comportant au moins un trou de raccordement (10) formé dans une section antérieure de la bande de film (5) à une carte de guidage de film (1A ; 1B) comportant une face avant et une face arrière afin d'entraîner la bande de film (5) dans un passage de développement d'un appareil de développement automatique, ladite carte de guidage (1A ; 1B) comportant au moins une paire de fentes avant (3, 7) et arrière (4, 8), la fente arrière étant située plus près d'une bordure de la carte de guidage, parallèlement à ladite bordure, et à une distance prédéfinie le long de la direction longitudinale de la carte de guidage (1A ; 1B) depuis ladite bordure de la carte de guidage, et
au moins une languette de raccordement (9a ; 9b) qui s'étend en travers de, et sur, la fente avant (3, 7) et est engagée par le trou de raccordement (10) de la bande de film (5) de manière à raccorder la bande de film (5) à la carte de guidage de film (1A ; 1B), le procédé comprenant les étapes consistant à :
placer une carte de guidage de film (1A ; 1B) en position à un moyen de guidage de positionnement (21a, 21b) en saillie depuis une surface supérieure plate d'une table de raccordement (20), ladite surface comportant au moins une partie concave de guidage de film (22) définie par une surface courbe (23) de manière qu'un bord arrière de la fente avant (3, 7) de la carte de guidage de film (1A ; 1B) se place à l'intérieur de l'ouverture de la partie concave de guidage de film (22) et soit situé très près d'un bord de l'ouverture de la partie concave de guidage de film (22) et qu'un bord arrière de la fente arrière (4, 8) de la carte de guidage de film (1A ; 1B) se place le long de l'autre bord de l'ouverture de la partie concave de guidage de film (22) ;
insérer la section antérieure de la bande de film (5) dans la partie concave de guidage de film (22) de la table de raccordement (20) par la fente arrière (4, 8) de la face avant de la carte de guidage de film (1A ; 1B) à une face arrière de la carte de guidage de film (1A ; 1B) ;
obliger la bande de film (5) à déplacer la section antérieure de la bande de film (5) le long de la surface courbe jusqu'à ce qu'une extrémité avant de la section antérieure de la bande de film (5) provenant de la face arrière de la carte de guidage de film (1A ; 1B) passe par la fente avant (3, 7) et jusqu'à la face avant de la carte de guidage de film (1A ; 1B) de manière à recourber la languette de raccordement (9a ; 9b) ;
laisser la languette de raccordement (9a ; 9b) de la carte de guidage (1A ; 1B) revenir en place et pénétrer dans le trou de raccordement (10) de la bande de film (5) afin d'amener la languette de raccordement (9a ; 9b) de la carte de guidage (1A ; 1B) en engagement avec le trou de raccordement (10) de la bande de film (5) ; et
ramener la bande de film (5) vers l'arrière et la tendre fortement.

2. Dispositif de raccordement de film pour raccorder une bande de film (5) comportant au moins un trou de raccordement (10) formé dans une section antérieure de la bande de film (5) à une carte de guidage de film (1A ; 1B) afin d'entraîner la bande de film (5) dans un passage de développement d'un appareil de développement automatique, ladite carte de guidage (1A ; 1B) comportant une paire de fentes transversales avant (3, 7) et arrière (4, 8), la fente arrière étant située plus près d'une bordure de la carte de guidage, parallèlement à ladite bordure, et à une distance prédéfinie le long de la direction longitudinale de la carte de guidage (1A ; 1B) depuis ladite bordure de la carte de guidage,
et au moins une languette de raccordement (9a ; 9b) qui s'étend en travers de, et sur, la fente avant (3, 7) et est engagée par le trou de raccordement (10) de la bande de film (5) de manière à raccorder la bande de film (5) à la carte de guidage de film (1A ; 1B), ledit dispositif de raccordement de film comprenant :
une table de raccordement (20) comportant une surface supérieure plate (20a) sur laquelle la carte de guidage de film (1A ; 1B) est placée ;
un moyen de guidage de positionnement de film (21a, 21b) pour placer la carte de guidage (1A ; 1B) dans la position spécifique sur la surface supérieure plate (20a) de la table (20) ;
un moyen de guidage de film défini par une surface courbe (23) formée dans la table (20) pour former une ouverture dans la surface supérieure plate (20a) de la table (20) afin de guider la bande de film (5) insérée par la fente arrière (4, 8) de la carte de guidage de film (1A ; 1B) située parmi les moyens de guidage de film vers la fente avant (3, 7) de la carte de guidage de film (1A ; 1B), ladite ouverture étant façonnée de manière que, lorsque la carte de guidage (1A ; 1B) est située parmi les moyens de guidage de film dans une position spécifique sur la surface supérieure plate (20a) de la table (20), un bord arrière de la fente avant (3, 7) de la carte de guidage de film (1A ; 1B) se place à l'intérieur de l'ouverture et soit situé très près d'un bord de l'ouverture et un bord arrière de la fente arrière (4, 8) de la carte de guidage de film (1A ; 1B) se place le long de l'autre bord de l'ouverture.

3. Dispositif de raccordement selon la revendication 2, dans lequel l'ouverture a une largeur sensiblement égale à une largeur de la section antérieure de la bande de film (5) .

4. Dispositif de raccordement selon la revendication 2, dans lequel le moyen de guidage de film (21a, 21b) est situé sur chaque côté d'une ligne médiane de la table (20).
